# EUROPEAN PATENT APPLICATION

(11) **EP 2 298 707 A1**
(43) Date of publication of application: **23.03.2011**
(21) Application number: 09766508.7
(22) Date of filing: 27.05.2009
(51) Int. Cl.: C03C 27/12, B32B 17/10, B60J 1/00

(54) **PROCESS FOR PRODUCTION OF LAMINATED GLASS INTERLEAVED WITH PLASTIC FILM AND LAMINATED GLASS INTERLEAVED WITH PLASTIC FILM**

(30) Priority: 16.06.2008 JP 2008156116; 03.07.2008 JP 2008174436
(71) Applicant: Central Glass Company, Limited, Yamaguchi 755-0001 (JP)
(72) Inventor: YONEKURA, Masaaki, Matsusaka-shi, Mie 515-0001 (JP); IZUTANI, Kensuke, Matsusaka-shi, Mie 515-0001 (JP); TAKAMATSU, Atsushi, Matsusaka-shi, Mie 515-0001 (JP); NAKAMURA, Isao, Matsusaka-shi, Mie 515-0001 (JP); SAKAMOTO, Hiromichi, Matsusaka-shi, Mie 515-0001 (JP)
(74) Representative: Manitz, Finsterwald & Partner GbR
(86) International application number: PCT/JP2009/059673
(87) International publication number: WO 2009/154060

(57) **Abstract**

According to the present invention, there is provided a production process of a plastic film-inserted laminated glass, the plastic film-inserted laminated glass having a laminated film in which a plastic film of 30 to 200 µm in thickness is sandwiched between two resin intermediate films and two glass plates, the process including at least the following three steps: a step 1 for forming a laminate in which the glass plate, the resin intermediate film, the plastic film, the resin intermediate film and the glass plate are laminated together in order of mention; a step 2 for degassing the formed laminate; and a step 3 for bonding the degassed laminate by pressing and heating, wherein the steps 1 and 2 are performed under conditions that the temperature of working atmosphere and the temperatures of the plastic film and resin intermediate films fall within a range of 10 to 25°C.

## Description

### Technical Field

The present invention relates to a laminated glass in which a glass plate, a resin intermediate film, a transparent resin film, a resin intermediate film and a glass plate are laminated together in this order, and more particularly, to a laminated film for an automotive window glass.

### Background Art

There is known, as a laminated glass with an infrared reflecting function (heat-ray reflecting function), one in which a plastic film, notably a polyethylene terephthalate film, is laminated between two glass plates via two resin intermediate films.

In general, a laminated glass is produced by thermally bonding a polyester film and glass plates together under a high-pressure high-temperature treatment in an autoclave.

For example, Patent Document 1 discloses a laminated glass produced by sandwiching an infrared-reflective plastic film, in which a thin coating is formed on a polyester film substrate, between two resin intermediate films and laminating the resulting flexible laminated film between two glass plates.

Patent Document 2 discloses a technique for, when heating a PET or PEN film with an infrared-reflective coating at 199 to 204°C or 227 to 243°C and placing the PET or PEN film on a curved pane, preventing the PET or PEN film from becoming wrinkled due to heat shrinkage.

Patent Document 3 discloses a process for producing a plastic film-inserted laminated glass with the use of a biaxially-stretched thermoplastic carrier film having a thickness of 30 to 70 µm and a heat shrinkage of 0.3 to 0.6% in stretching directions.

Patent Document 4 discloses that, when a polyvinyl acetal resin film and a polyester film are laminated to each other, the mechanical strength of the interface between the polyvinyl acetal resin film and the polyester film can be improved by the application of an amino silane coupling agent to the polyester film.

Further, Patent Document 5 discloses the formation of a hard coat layer on a polyester film by the application of an amino silane coupling agent.

### Prior Art Documents

### Patent Documents

Patent Document 1: Japanese Laid-Open Patent Publication No: 56-32352
Patent Document 2: Published Japanese Translation of PCT International Application No. 2004-503402
Patent Document 3: Japanese Patent No. 3669709
Patent Document 4: Japanese Laid-Open Patent Publication No. 2001-106556
Patent Document 5: Japanese Laid-Open Patent Publication No. 2004-195741

### Disclosure of the Invention

### Problems to be Solved by the Invention

In the case of producing a laminated glass by sandwiching a plastic film between two resin intermediate films and laminating the resulting laminated film between two curved glass plates, there arises a problem that wrinkles occur in the plastic film and becomes a cause of appearance defects.

### Means for Solving the Problems

It is accordingly an object of the present invention to provide a process for producing a plastic film-inserted laminated glass in which a plastic film is laminated between glass plates without causing wrinkles in the plastic film even when the glass plates have a curved shape.

Namely, there is provided according to the present invention a production process of a plastic film-inserted laminated glass, the plastic film-inserted laminated glass having a laminated film in which a plastic film of 30 to 200 µm in thickness is sandwiched between two resin intermediate films and two glass plates, the process comprising at least the following three steps: a first step for forming a laminate in which the glass plate, the resin intermediate film, the plastic film, the resin intermediate film and the glass plate are laminated together in order of mention; a second step for degassing the formed laminate; and a third step for bonding the degassed laminate by pressing and heating, wherein the first and second steps are performed under conditions that the temperature of working atmosphere and the temperatures of the plastic film and resin intermediate films fall within a range of 10 to 25°C.

There is also provided according to the present invention a plastic film-inserted laminated glass produced by the above production process, wherein the glass plates have a curved shape with a radius of curvature of 0.9 to 3 m.

### Brief Description of the Drawing

FIG. 1 is a schematic section view of a plastic film-inserted laminated glass according to one embodiment of the present invention.
FIG. 2A is a schematic view of a device for forming a laminated film from a plastic film and a resin intermediate film by heating the plastic film.
FIG. 2B is a schematic view of a device for forming a laminated film from a plastic film and resin intermediate films by heating the plastic film.
FIG. 3A is a schematic view of a device for forming a laminated film from a plastic film and a resin intermediate film by heating the plastic film.
FIG. 3B is a schematic view of a device for forming a laminated film from a plastic film and resin intermediate films by heating the plastic film.
FIG. 4A is a schematic view of a device for forming a laminated film from a plastic film and a resin intermediate film.
FIG. 4B is a schematic view of a device for forming a laminated film from a plastic film and resin intermediate films.
FIG. 5A is a schematic view of a device for forming a laminated film from a plastic film and a resin intermediate film.
FIG. 5B is a schematic view of a device for forming a laminated film from a plastic film and resin intermediate films.
FIG. 6A is a schematic view of a device for forming a laminated film from a plastic film and a resin intermediate film.
FIG. 6B is a schematic view of a device for forming a laminated film from a plastic film and resin intermediate films.
FIG. 7A is a detail diagram showing a technique for degassing the laminated film with the use of pressing rolls in the device of FIG. 4A.
FIG. 7B is a detail diagram showing a technique for degassing the laminated film with the use of pressing rolls in the device of FIG. 4B.
FIG. 8 is a schematic section view showing a technique for degassing a laminate with the use of rolls.
FIGS. 9 and 10 are schematic plan and section view showing a technique for degassing a laminate with the use of a tube.
FIGS. 11 and 12 are schematic plan and section views showing a technique for degassing a laminate with the use of a vacuum bag.
FIG. 13 is a schematic section view of a coating structure of an infrared-reflective coating applied to the plastic film of the plastic film-inserted laminated glass according to one embodiment of the present invention.
FIG. 14 is a schematic view of a coating structure of an infrared-reflective coating, a coating of a silane coupling agent and a hard coating applied to the plastic film of the plastic film-inserted laminated glass according to one embodiment of the present invention.
FIG. 15 is a schematic view of a plastic film-inserted laminated glass according to another embodiment of the present invention.
FIG. 16 is a diagram showing how to measure a heat shrinkage.
FIG. 17 is a schematic section view of a plastic film with an infrared-reflective coating according to another embodiment of the present invention.
FIG. 18 is a schematic section view of a plastic film-inserted laminated glass according to another embodiment of the present invention.
FIG. 19 is a schematic section view of a plastic film-inserted laminated glass according to another embodiment of the present invention.
FIG. 20 is a schematic section view of a plastic film with an infrared-reflective coating according to another embodiment of the present invention.
FIG. 21 is a schematic section view of a plastic film-inserted laminated glass according to another embodiment of the present invention.
FIG. 22 is a schematic section view of a plastic film-inserted laminated glass according to another embodiment of the present invention.
FIG 23 is a schematic section view of a plastic film-inserted laminated glass according to another embodiment of the present invention.
FIG. 24 is a schematic section view of a plastic film with an infrared-reflective coating according to another embodiment of the present invention.
FIG. 25 is a schematic section view of a plastic film-inserted laminated glass according to another embodiment of the present invention.

### Detailed Description

Hereinafter, the present invention will be described in detail.

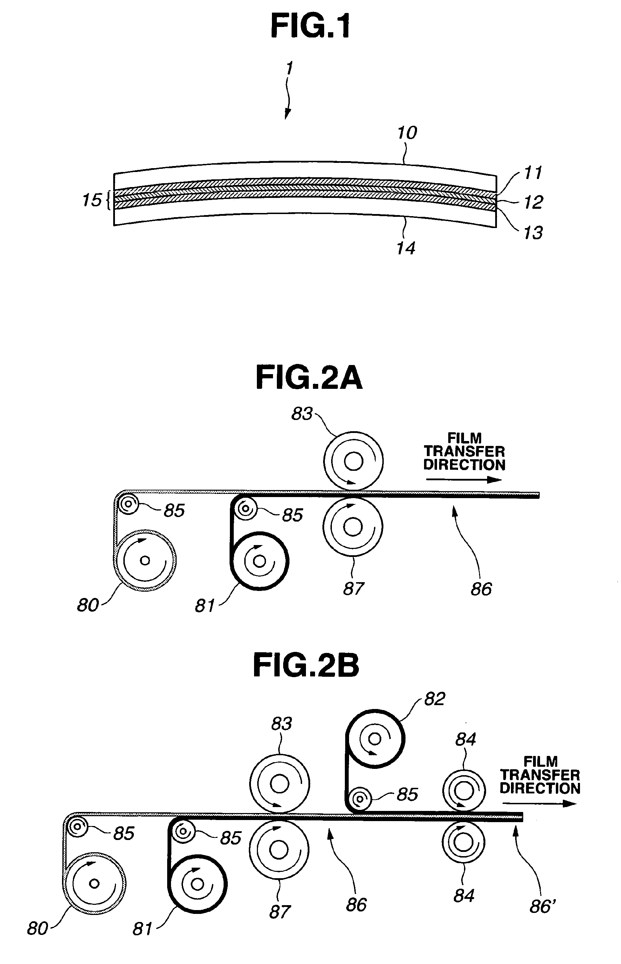

According to one embodiment of the present invention, there is produced a curved plastic film-inserted laminated glass 1 from a laminated film 15 in which a plastic film 12 is sandwiched between resin intermediate films 11 and 13 and glass plates 10 and 14 as shown in FIG. 1.

A production process of the plastic film-inserted laminated glass 1 includes at least the following three steps (steps 1, 2 and 3).
Step 1: A step for forming a laminate 2 by laminating the plastic film 12, the resin intermediate films 11 and 13 and the curved glass plate 10 and 14 together in proper order.
Step 2: A step for degassing the laminate 2 formed in the step 1.
Step 3: A step for bonding the degassed laminate 2 by pressing and heating.

In the step 1, the laminate 2 can be formed by sandwiching the plastic film 12 between the resin intermediate films 11 and 13 and placing the resulting laminated film between the two curved glass plates 10 and 14. The laminate 2 may alternatively be formed by laminating the resin intermediate layer 13 (11), the plastic film 12, the resin intermediate layer 11 (13) and the curved glass plate 10 (14) sequentially in this order on the curved glass plate 14 (10).

For example, it is feasible to perform the step 1 in the following three substeps (substeps 1a, 1b and 1c).
Substep 1a: A substep for forming a film laminate by laminating at least one resin intermediate film 11 (13) and the plastic film 12 together.
Substep 1b: A substep for forming the laminated film by degassing the film laminate.
Substep 1c: A substep for forming the laminate 2 by cutting the laminated film into a size corresponding to the glass plates 10 and 14 and laminating the cut laminated film between the glass plates 10 and 14.

The substeps 1a and 1b can be performed by any of devices shown in FIGS. 2A to 6B. Herein, FIGS. 2A, 3A, 4A, 5A and 6A each show an example of the device for forming a two-layer laminated film 77, 86 by laminating a single resin intermediate film and a single plastic film together; and FIGS. 2B, 3B, 4B, 5B and 6B each show an example of the device for forming a three-layer laminated film 77', 86' by laminating a single plastic film between two resin intermediate films.

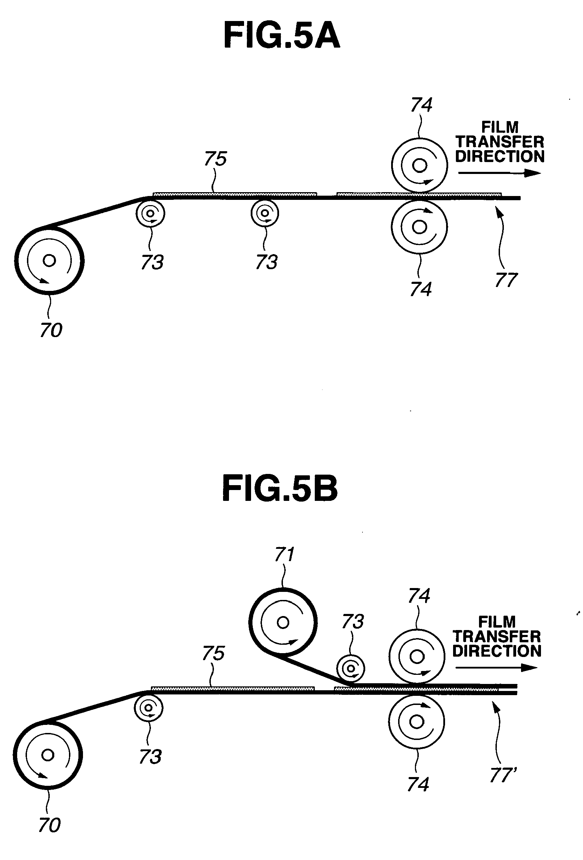

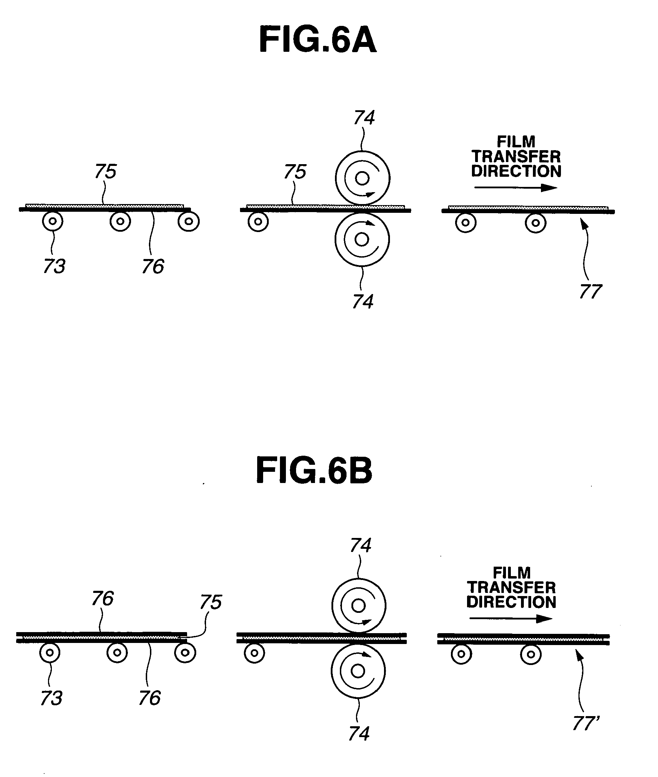

As shown in FIGS. 2A, 2B, 3A, 3B, 4A and 4B, it is preferable to provide the plastic film 12 and the resin intermediate film 11, 13 in the form of rolls (a plastic film roll 71, 80 and a resin intermediate film roll 70, 72, 81, 82). It is, however, alternatively feasible to provide the plastic film 12 in the form of a cut sheet of predetermined shape (a plastic film sheet 75) as shown in FIGS. 5A and 5B, or to provide the plastic film 12 and the resin intermediate film 11, 13 in the form of cut sheets of predetermined shapes (a plastic film sheet 75 and a resin intermediate film sheet 76) as shown in FIGS. 6A and 6B.

In the device of FIG. 2A, the plastic film roll 80 and the first resin intermediate film roll 81 are supported by freely-rotatable supporting members (not shown) so that the plastic film and the resin intermediate film are pulled out from the plastic film roll 80 and the first resin intermediate film roll 81, respectively, and laminated together. The resulting laminate of the plastic film and the resin intermediate film is passed through between a pressing roll 87 and a heating roll 83. With this, the laminated film 86 is formed by degassing the space between the plastic film and the resin intermediate film and thermally bonding the plastic film and the resin intermediate film 11 to each other.

In the device of FIG. 2B, the resin intermediate film pulled out from the second resin intermediate film roll 82 is laminated on the plastic film side of the two-layer laminated film 86 formed by the device of FIG. 2A. The resulting laminate of the laminated film and the resin intermediate film is passed through between pressing rolls 84, thereby forming the three-layer laminated film 86' by degassing and thermal bonding.

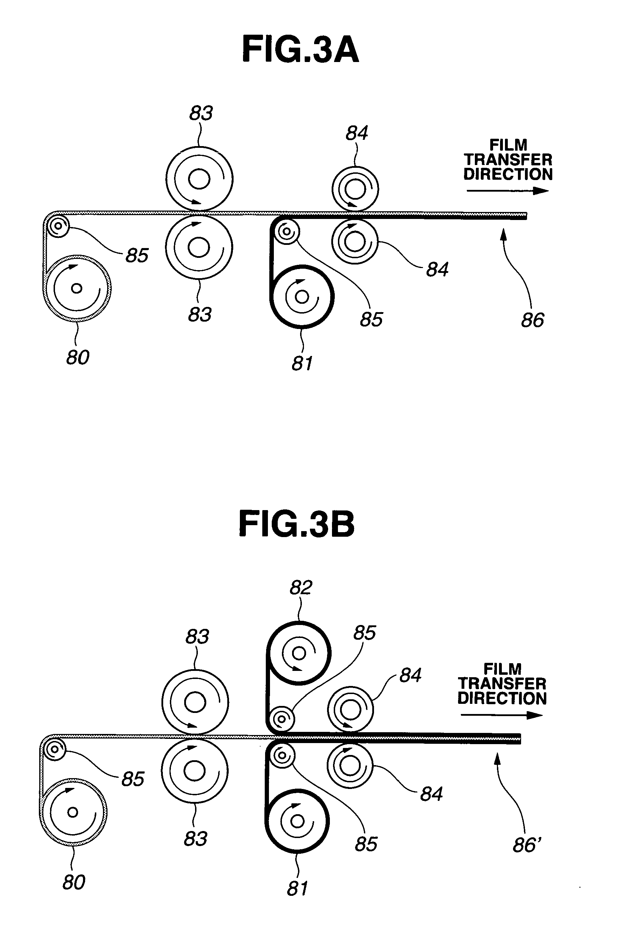

In the devices of FIGS. 3A and 3B, the plastic film pulled out from the plastic film roll 80 is heated by passing through between heating rolls 83. The heated plastic film is laminated to the resin intermediate film or films pulled out from the resin intermediate film roll or rolls 81. The resulting laminate of the plastic film and the resin intermediate film or films is then passed through between pressing rolls 84, thereby forming the laminated film 86, 86' by degassing and thermal bonding.

In each of the devices of FIGS: 2A, 2B, 3A and 3B, film supporting rolls 85 are provided to support and guide the plastic film and the resin intermediate film or films through between the pressing roll 87 and the heating roll 83 and through between the pressing rolls 84. It is preferable that the film supporting rolls 85 have surfaces formed of a metal or a rigid resin.

The pressing rolls 84 and 87 are used to degas the space between the plastic film and the resin intermediate film or films. It is preferable that the pressing rolls 84 and 87 have surfaces covered with a rubber resin such as silicon rubber, urethane rubber or the like. It is also preferable that the surfaces of the pressing rolls 84 and 87 are of any material that does not become thermally bonded to the resin intermediate film.

As the heating roll 83, there can suitably be used a roll having a surface formed of a metal and equipped with a built-in heater.

It is preferable to set the surface temperature of the heating roll 83 to within the range of 50 to 110°C and control the surface temperature of the plastic film to within the range of 40 to 60°C. If the surface temperature of the plastic film is lower than 40°C, it becomes a cause of insufficient thermal bonding of the plastic film and the resin intermediate film. If the surface temperature of the plastic film is higher than 60°C, the plastic film and the resin intermediate film are strongly bonded to each other so that there arise problems that: when an unnecessary portion of the laminated film 86, 86' protruding from the glass plates 10 and 14 is trimmed in the laminate formation substep 1c, the plastic film and the resin intermediate film of the trimmed unnecessary portion of the laminated film 86, 86' are not separated from each other; and the resin intermediate film gets adhered to the pressing roll 84, 87.

It is further preferable to set the pressure of the pressing rolls 84 and 87 to within the range of 0.1 to 0.3 MPa and to set the transfer speed of the plastic film and the resin intermediate film to within the range of 0.5 to 4 m/min. If the pressure of the pressing rolls 84 and 87 is lower than 0.1 MPa or higher than 0.3 MPa, it becomes a cause of insufficient degassing between the plastic film and the resin intermediate film. If the transfer speed of the plastic film and the resin intermediate film is lower than 0.5 m/min, it becomes a cause of deterioration in productivity. If the transfer speed of the plastic film and the resin intermediate film is higher than 4 m/min, it becomes a cause of insufficient bonding strength or insufficient degassing between the plastic film and the resin intermediate layer.

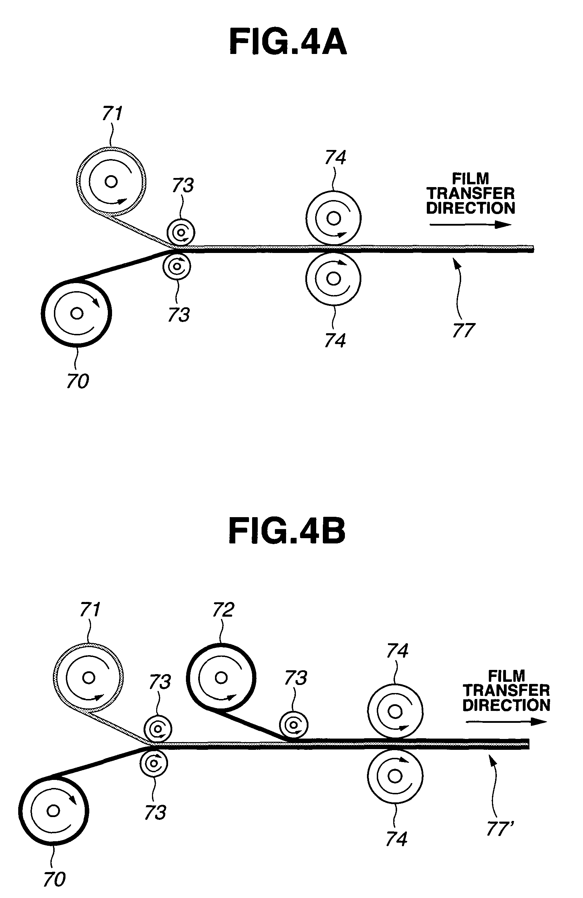

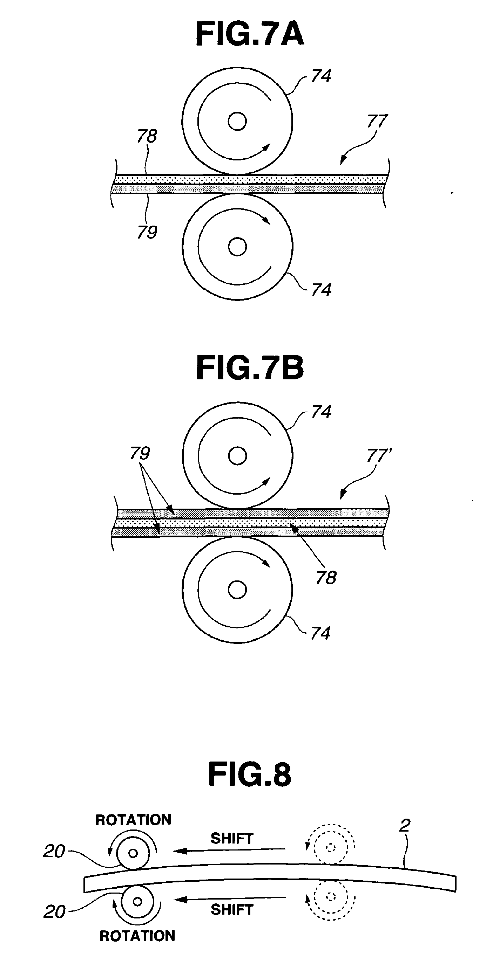

In the device of FIG. 4A, the first resin intermediate film roll 70 and the plastic film roll 71 are supported by freely-rotatable supporting members (not shown) so that the the resin intermediate film 79 and the plastic film 78 are pulled out from the first resin intermediate film roll 70 and the plastic film roll 71, respectively, and laminated together as shown in FIG. 7A. The resulting laminate of the plastic film 78 and the resin intermediate film 79 is passed through between two pressing rolls 74. With this, the two-layer laminated film 77 is formed by degassing the space between the plastic film 78 and the resin intermediate film 79.

In the device of FIG. 4B, the first resin intermediate film roll 70, the plastic film roll 71 and the second resin intermediate film roll 72 are supported by freely-rotatable supporting members (not shown) so that the plastic film pulled out from the plastic film roll 71 is inserted between the two resin intermediate films 79 pulled out from the first and second resin intermediate film rolls 70 and 72 as shown in FIG. 7B. The resulting laminate of the resin intermediate film 79, the plastic film 78 and the resin intermediate film 79 is passed through between two pressing roll 74. With this, the three-layer laminated film 77' is formed by degassing the space between the plastic film 78 and the resin intermediate films 79.

In each of the devices of FIGS. 4A and 4B, film supporting rolls 73 are also provided to support and guide the plastic film and the resin intermediate film or films through between the pressing rolls 74. There can suitably be used, as the film supporting rolls 73, those having roll surfaces formed of a metal or a rigid resin.

The pressing rolls 74 are used to degas the space between the plastic film and the resin intermediate film or films. It is preferable that the pressing rolls 74 have surfaces covered with a rubber resin such as silicon rubber, urethane rubber or the like.

In the case of providing the plastic film in cut sheet form rather than in roll form, it is feasible to form the laminated film 77 by placing the cut plastic film sheet 75 on the resin intermediate film pulled out from the first resin intermediate film roll 70, passing the resulting laminate of the plastic film sheet 75 and the resin intermediate film through between pressing rolls 74 and thereby degassing the film laminate as in the device of FIG. 5A, or to form the laminated film 77' by placing the cut plastic film sheet 75 on the resin intermediate film pulled out from the first resin intermediate film roll 70, laminating on the plastic film sheet 75 the resin intermediate film pulled out from the second resin intermediate film roll 71, passing the resulting laminate of the plastic film sheet 75 and the resin intermediate films through between pressing rolls 74 and thereby degassing the film laminate as in the device of FIG 5B.

It is further feasible, in the case of using the plastic film in cut sheet form, to form the two-layer laminated film 77 or three-layer laminated film 77' by cutting the resin intermediate film or films into a shape corresponding to the plastic film, passing the laminate of the resin intermediate film sheet 76 and the plastic film sheet 75 or the laminate of the resin intermediate film sheet 76, the plastic film sheet 75 and the resin intermediate film sheet 76 through between pressing rolls 74 and thereby degassing the film laminate as shown in FIGS. 6A and 6B.

When the plastic film-inserted laminate glass has a relatively small size of 500 mm or less, the devices of FIGS. 5A, 5B and 6A and 6B can suitably be used due to the ease of handling of the plastic film.

It is preferable to set the pressure of the pressing rolls 74 to within the range of 0.1 to 0.3 MPa in the case of forming the laminated film 77, 77' by bonding the plastic film and the resin intermediate film or films together only with the use of the pressing rolls 74 as in the devices of FIGS. 4A, 4B, 5A, 5B, 6A and 6B. If the pressure of the pressing rolls 74 is lower than 0.1 MPa or higher than 0.3 MPa, it becomes a cause of insufficient degassing between the plastic film and the resin intermediate film or films. It is further preferable to set the transfer speed of the laminated film 77, 77' by the pressing rolls 74 to within the range of 0.5 to 4 m/min. If the transfer speed of the laminated film 77, 77' is lower than 0.5 m/min, it becomes a cause of deterioration in productivity. If the transfer speed of the laminated film 77, 77' is higher than 4 m/min, it becomes a cause of insufficient degassing.

In the devices of FIGS. 4A, 5A and 6A, there may be used as the pressing roll 74 on the plastic film side a heating roll so as to thermally bond the plastic film to the resin intermediate film.

In the case of producing a plastic film-inserted laminated glass by inserting the laminated film 77, 77' between two curved glass plates, it is likely that air will enter into the space between the plastic film and the resin intermediate film from the edge vicinity of the laminated film 77, 77' and thereby cause wrinkles in an edge portion of the plastic film at a periphery of the plastic film-inserted laminated glass. This defect becomes pronounced when the radius of curvature of the glass plates is small. It is thus preferable, in order to prevent the occurrence of such a defect, that the plastic film and the resin intermediate film or films are strongly bonded together as in the laminated film 86, 86'.

Further, wrinkles are likely to occur in the plastic film at peripheral portions of the glass plates in the case of using the glass plates of small curvature radius in the production of the plastic film-inserted laminated glass. It is effective to set the plastic film to be smaller in area than the glass plates as a mean for preventing the occurrence of wrinkles in the plastic film at the peripheral portions of the glass plates and thus is desirable to form the two-layer laminated film of the plastic film and the resin intermediate film (such as the laminated film 86 shown in FIG.. 2A, 3A or the laminated film 77 shown in FIG.. 4A) so that only the plastic film can be worked into a given shape corresponding to the size of the glass plates.

It is also preferable, in the case of forming the two-layer laminated film 77', 86' of the plastic film and the resin intermediate film, to provide the plastic film with an infrared-reflective coating so that the resin intermediate film can be thermally bonded to the infrared-reflective coating as will be discussed later. This is because a dielectric layer of the infrared-reflective coating shows good adhesion to the resin intermediate film.

In the substep 1c, the laminate 2 can be obtained by, in the case of forming the three-layer laminated film 77, 86 of the resin intermediate film, the plastic film and the resin intermediate film in the substeps 1a and 1b, laminating the laminated film 77, 86 and the glass plates 10 and 14 sequentially in proper order or inserting the laminated film 77, 86 between the glass plates 10 and 14. In the case of forming the two-layer laminated film 77', 86' of the plastic film and the resin intermediate film in the substeps 1a and 1b, the laminate 2 can be obtained by laminating the glass plate, the laminated film 77', 86', the resin intermediate film and the glass plate together in such a manner as to sandwich the plastic film between the resin intermediate films.

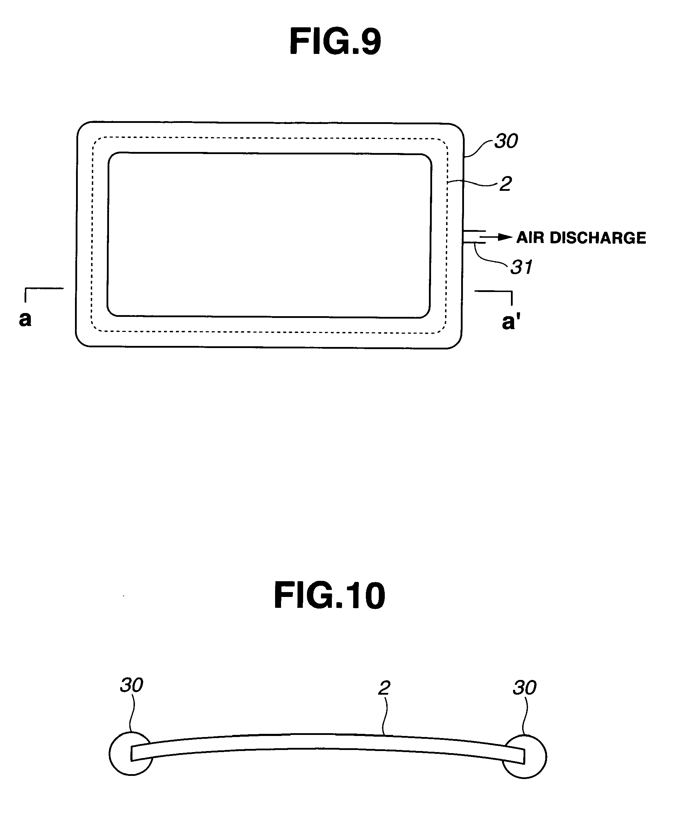

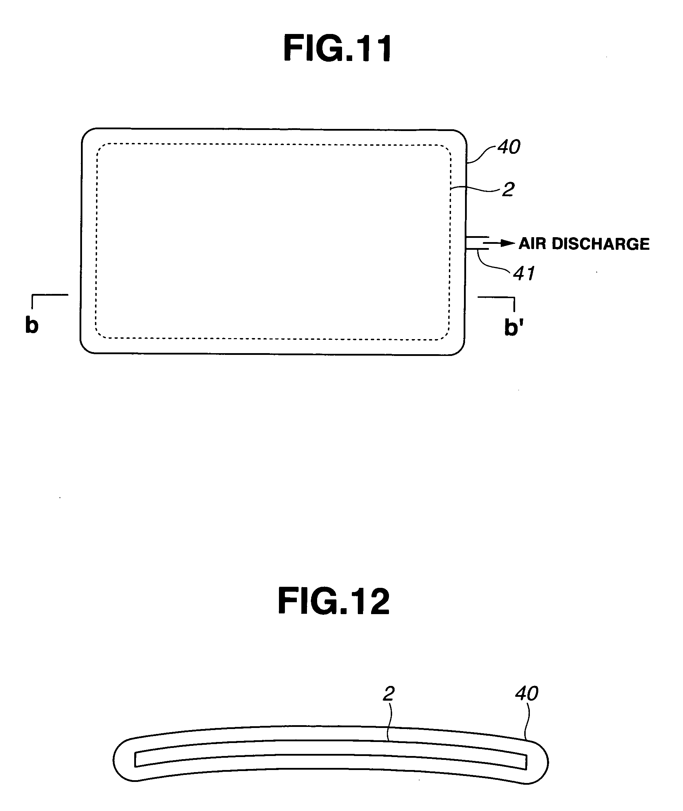

In the step 2, the degassing technique is not particularly limited. The degassing can be done by pressing the laminate 2 from its both sides with pressing rolls 20 as shown in FIG. 8, by fitting a rubber-base resin tube 30 around the laminate 2 and discharging air from the tube 30 through a nozzle 31 as shown in FIGS. 9 and 10, or by placing the laminate 2 in a vacuum bag 40 and discharging air from the vacuum bag 40 through a nozzle 41 as shown in FIGS. 11 and 12. Herein, there can suitably be used a vacuum pump for air discharge.

It is preferable to perform the steps 1 and 2 (notably, the substep 1c, or the substep 1c and the step 2) under conditions that the temperature of working atmosphere and the temperatures of the plastic film 12 and resin intermediate films 11 and 13 fall within a range of 10 to 25°C, more preferably 15 to 25°C. If the temperature of the plastic film 12 or the resin intermediate film 11, 13 is higher than 25°C, wrinkles occur in the plastic film 12 during the lamination of the plastic film 12 and the resin intermediate films 11 and 13. The wrinkles, when they once occur, does not disappear in the degassing operation of the step 2 and remains after the high-pressure high-temperature bonding operation of the step 3, thereby resulting in appearance defects. If the steps 1 and 2 are performed at a temperature of lower than 10°C, there is a fear that condensation occurs on the glass plates in the subsequent high-outside-air-temperature, high-humidity operation and thereby becomes a cause of not only deteriorations of the resin intermediate films 11 and 13 and but also device troubles due to water drops. It could also cause a deterioration in workability due to cold in the case where the lamination operation is conducted by man power.

The step 3 can be performed in the same manner as that of the case of a laminated glass with a single resin intermediate layer. It is preferable to perform a pressing and heating treatment in an autoclave under the conditions of a heating temperature of 90 to 150C°, a pressing pressure of 1 MPa or lower and a treatment time of about 30 minutes.

It is convenient to use, as the curved glass plates 10 and 14, three-dimensionally curved glass plates obtained by heating soda-lime float glass material to a temperature higher than a softening temperature thereof and bending the heated glass material. The shape of the three-dimensionally curved glass plates can be a spherical shape, an elliptic spherical shape, a shape in which the curvature radius changes with position as in an automotive front glass, or the like.

Preferably, the radius of curvature of the curved glass plates 10 and 14 is in the range of 0.9 to 3 m. If the curvature radius of the glass plates 10 and 14 is smaller than 0.9 m, it is likely that wrinkles will occur in the plastic film 12 during the lamination operation. The glass plates 10 and 14 become closer to a flat shape as the curvature radius of the glass plates 10 and 14 increases. The present invention provides almost no effects for preventing the occurrence of wrinkles in the plastic film 12. The effects of the present invention can be secured when the curvature radius of the curved glass plates 10 and 14 is smaller than or equal to 3 m.

In order to improve the heat insulation performance of the plastic film-inserted laminated glass 1, it is preferable to use an infrared-absorptive glass plate as at least one of the glass plates 10 and 14.

As the resin intermediate films 10 and 11, there can suitably be used films of hot-melt adhesives such as polyvinyl butyral (PVB) and ethylene vinyl acetate (EVA). It is preferable to use, as the resin intermediate films 11 and 13, infrared-absorptive films in which conductive oxide particles are contained as an infrared-absorptive material for improved heat insulation performance. The thickness of the resin intermediate films 11 and 13 is preferably in the range of 0.3 to 1.2 mm.

As the plastic film 12, there can selectively be used films formed by a stretching method from polyethylene terephthalate, polyethylene naphthalate, polycarbonate, polymethyl methacrylate, polyethersulfone, nylon, polyarylate, cycloolefin polymer and the like. Among others, a biaxially-stretched crystalline polyethylene terephthalate film (PET film) is particularly suitable as the plastic film 12 as it has high heat resistance for use in a wide range of temperature environments, exhibits high transparency and can be mass produced with stable quality.

The plastic film 12 is preferably cut to a size smaller than that of the curved glass plates 10 and 14 for window use. The occurrence of wrinkles in the plastic film 12 at the peripheries of the glass plates 10 and 14 can be prevented more effectively by cutting the plastic film 12 to be smaller in size than the glass plates 10 and 14.

Further, the thickness of the plastic film 12 is preferably in the range of 30 to 20 µm. If the thickness of the plastic film 12 is smaller than 30 µm, it is likely that the plastic film 12 will be deformed and wrinkled. Further, it becomes difficult to handle the plastic film 12. In the case where an infrared-reflective coating is provided to the plastic film 12, the plastic film 12 is particularly likely to get curled due to the stress of the infrared-reflective coating. On the other hand, there arise appearance defects due to poor degassing during the lamination operation if the thickness of the plastic film 12 is greater than 200 µm.

The plastic film 12 may suitably have an infrared-reflective (heat-ray reflective) coating on one side thereof.

As the infrared-reflective coating, there can suitably be used a multilayer coating of metal layers of Au, Ag, Cu, Al and the like and/or dielectric layers of Ti0₂, Nb₂O₅, Ta₂O₅, SiO₂, Al₂O₃, ZrO₂, MgF₂ and the like. It is particularly preferable to use an infrared-reflective coating in which dielectric layers are laminated to one another as such a dielectric multilayer coating allows transmission of electromagnetic waves therethrough for communications and thus can be used in a vehicle such as automobile without impairing the function of any communication instrument in the vehicle interior.

The infrared-reflective coating can be applied to the plastic film by a sputtering method. As coating application methods other than the sputtering method, there can be adopted: a vapor deposition method or an ion plating method for the formation of the metal coating; and a CVD method, a vapor deposition method or an ion plating method for the formation of the dielectic coating.

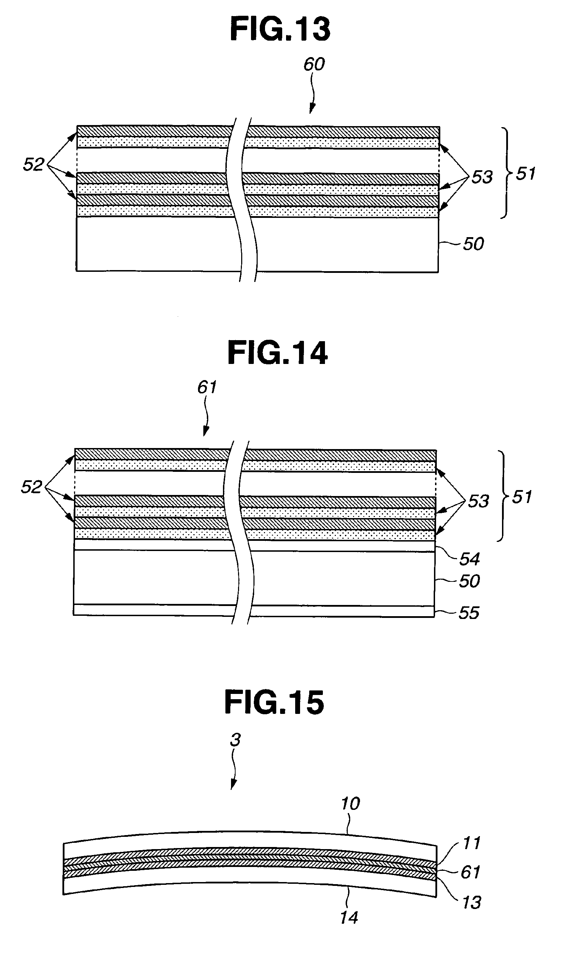

In the case of using as the plastic film 12 an infrared-reflective coated plastic film 60 in which an infrared-reflective coating 51 is formed with a dielectric multilayer structure on one side of a plastic film substrate 50 as shown in FIG. 13, it is preferable that the infrared-reflective coating 50 has 4 to 11 dielectric layers laminated together and shows a maximum reflectance of higher than 50% in a wavelength range of 900 to 1400 nm so as to satisfy the following conditions (1) and (2):
(1) nₑₘₐₓ < nₒₘᵢₙ or nₒₘₐₓ < nₑₘᵢₙ where, when the dielectric layers are numbered in order from the side of the plastic film substrate 50, nₑₘₐₓ and nₑₘᵢₙ represent the maximum and minimum values of the refractive index of an even-numbered layer 52, respectively; and nₒₘₐₓ and nₒₘᵢₙ represent the maximum and minimum values of the refractive index of an odd-numbered layer 53, respectively; and
(2) 225 nm ≤ ni·di ≤ 350 nm relative to infrared rays having a wavelength λ of 900 to 1400 nm where nᵢ and dᵢ represent the reflective index and thickness of an i-th numbered layer, respectively.

If the lamination number of the dielectric layers in the infrared-reflective coating 51 is 3 or less, the near-infrared reflection of the infrared-reflective coating 51 becomes insufficient. It is thus desirable that the number of the dielectric layers in the infrared-reflective coating 51 is 4 or more. As the number of the dielectric layers increases, the maximum value of the near-infrared reflection of the coating becomes greater; and the visible light reflection color of the coating becomes closer to colorlessness. Thus, the infrared-reflective coating 51 becomes more favorable as the number of the dielectric layers increase. However, the production cost becomes too high if the number of the dielectric layers exceeds 12. There also arises a problem in durability due to the increase of layer stress by the increase of the number of the dielectric layers. It is thus desirable that the number of the dielectric layers in the infrared-reflective coating 51 is 11 or less.

In order for the infrared-reflective coating 51, in which the dielectric layers are laminated together, to act as an effective heat shield against solar heat rays while maintaining the visible light transmittance, it is important that the maximum value of the reflectance of the infrared-reflective coating 51 in the wavelength range of 900 to 1400 nm exceeds 50%. In connection with this, it is effective to reflect a light of 900 to 1400 nm wavelength, which has a relatively large multiple value coefficient for calculating a solar radiation transmittance according to JIS R 3106-1998, for the purposes of minimizing visible light absorption and reflection that can lead to a deterioration in the visible light transmittance and reducing the solar radiation transmittance according to JIS R 3106-1998 in view of the energy distribution of wavelengths of sunlight and the wavelengths that can be converted to heat by absorption. Namely, it is effective that the maximum value of the reflectance is in the wavelength range of 900 to 1400 nm and is important that the maximum value of the reflectance is 50% or greater in order to achieve effective heat insulation performance.

It is further desirable, in the laminated coating 51 of the dielectric layers, that: the high-refractive-index dielectric layers are formed of TiO₂, Nb₂O₅ or Ta₂O₅; and the low-refractive-index dielectric layers are formed of SiO₂ in order to achieve a maximum reflectance value of 50%.

In the case of producing the plastic film-inserted laminated glass 1 using the infrared-reflective coated plastic film 60, it is preferable that the infrared-reflective coated plastic film 60 satisfies either of the following conditions (A), (B) and (C) in order to prevent the infrared-reflective coated plastic film 60 from becoming wrinkled.
(A) The infrared-reflective coated plastic film 60 has a heat shrinkage of 0.5 to 4% in the temperature range of 90 to 150°C.
(B) The plastic film substrate 50 has an elastic modulus of 30 to 2000 MPa in the temperature range of 90 to 150°C.
(C) The plastic film substrate 50 has an elongation of 0.3% or less as measured by the application of a tensile load of 10 N per 1m width of the plastic film substrate 50 in the temperature range of 90 to 150°C.

If the heat shrinkage of the infrared-reflective coated plastic film 60, in which the infrared-reflective coating 51 has been formed on the plastic film substrate 50, is less than 0.5% in the temperature range of 90 to 150°C, the film 60 becomes too loose at the peripheries of the curved glass plates so that wrinkles occurs in the film 60 as appearance defects. If the heat shrinkage of the infrared-reflective coated plastic film 60 exceeds 4% in the temperature range of 90 to 150°C, the infrared-reflective coating 51 cannot withstand shrinkage of the film substrate so that cracks occurs in the coating 51 as appearance defects. It is thus preferable that the heat shrinkage of the infrared-reflective coated plastic film 60 ranges from 0.5 to 3%, more preferably 0.5 to 2%, in the temperature range of 90 to 150°C in order to prevent the occurrence of wrinkles in the infrared-reflective coated plastic film 60 or cracks in the infrared-reflective coating 51 during the lamination operation.

In the case of a transparent plastic film formed by a stretching method such as successive biaxial stretching method, there occurs a stress during the formation of the film. This stress remains in the inside of the stretched plastic film. The stretched plastic film tends to get contracted upon relief of the stress by a thermal treatment and thus can suitably be used.

In order to prevent the plastic film substrate 50 from becoming wrinkled even under the high temperature conditions of 90 to 150°C during the high-pressure high-temperature treatment in the autoclave, it is preferable to satisfy the condition (B) that the elastic modulus of the plastic film substrate 50 is 30 to 2000 MPa, more preferably 30 to 500 MPa, in the temperature range of 90 to 150°C. The elastic modulus of the plastic film substrate 50 can be determined, from a stress-strain curve in the temperature range of 90 to 150°C, using a viscoelasticity measurement device. If the elastic modulus of the plastic film substrate 50 is smaller than 30 MPa, the plastic film substrate 50 tends to get deformed even by a small external force so that wrinkles are likely to occur as appearance defects in the whole surface of the laminated glass. If the elastic modulus of the plastic film substrate 50 is greater than 200 MPa, it becomes a cause of poor degassing due to incomplete air discharge from the space between the plastic film and the resin intermediate films during the high-pressure high-temperature in the autoclave.

It is alternatively preferable to satisfy the condition (C) that the elongation of the plastic film substrate 50 is 0.3% or less as measured by the application of a tensile load of 10 N per 1m width of the plastic film substrate 50 in the temperature range of 90 to 150°C, in order to prevent the plastic film substrate 50 from becoming wrinkled even under the high temperature conditions of 90 to 150°C during the high-pressure high-temperature treatment in the autoclave. Herein, the tensile load of 10 N applied per 1 m width of the plastic film substrate 50 corresponds to a tension that occurs on the plastic film 12 in such a manner as to extend the plastic film 12 when the plastic film 12 sandwiched between the resin intermediate films 11 and 13 is subjected to the high-pressure high-temperature treatment in the autoclave for thermal bonding of the plastic film 12 to the glass plates 10 and 14 via the resin intermediate films 11 and 13.

The elongation of the plastic film substrate 50 can be measured through the following steps 1 to 5.
Step 1: The plastic film substrate was cut to a size of 15 mm in length and 5 mm in width as a measurement sample. Fixing jigs are attached to opposite ends of the measurement sample and set in such a manner as to adjust the length of the measurement sample exposed between the fixing jigs to 10 mm.
Step 2: The measurement sample is placed under a tensile load of 10 N per 1 mm width of the plastic film substrate. Namely, a load of 0.05 N is applied to the measurement sample of the step 1.
Step 3: In this state, the length L0 of the measurement sample between the fixing jigs is measured.
Step 4: The measurement sample is heated at a rate of 5°C/min to a given temperature within the range of 90 to 150°C. Then, the length L of the measurement sample between the fixing jigs is measured.
Step 5: The elongation (%) is determined by the following equation: (LO - L) / L × 100.

It is also preferable that a coating 55 of a silane coupling agent is formed on a side of the plastic film substrate 50 opposite from the side on which the infrared-reflective coating 51 is formed. Herein, the silane coupling agent has the function of providing good adhesion between the plastic film substrate and the resin intermediate film. As the silane coupling agent, there can be used those having an amino group, an isocyanate group, an epoxy group and the like.

It is further preferable that a hard coating 54 is formed between the plastic film substrate 50 and the infrared-reflective coating 51. Depending on the kind of the plastic film 12 sandwiched between the resin intermediate films 11 and 13, there arise problems that: the adhesion of the plastic film 12 to the resin intermediate films 11 and 13 becomes poor; and white turbidity occurs upon the formation of the infrared-reflective coating. These problems can be solved by the formation of the hard coating 54 at the interface between the plastic film substrate and the infrared-reflective coating.

Each of the hard coating 54 and the coating 55 of the silane coupling agent can be formed by applying the corresponding coating material by a spraying method, a spin coating method, a roll coating method, a dipping method or the like.

Furthermore, it is preferable that the plastic film-inserted laminated glass 1 has a visible light transmittance of 70% or higher as measured according to JIS R 3211-1998 in order to allow a visible light from sunlight into the interior and create a comfortable, well-lighted space in the interior. It is particularly important, in the case of using the plastic film-inserted laminated glass 1 as an automotive front glass, that the plastic film-inserted laminated glass 1 secures a visible light transmittance of 70% according to JIS R 3211.

The present invention will be described in more detail below by way of the following Examples and Comparative Examples with reference to the drawings. It should be noted that these examples are illustrative and are not intended to limit the present invention thereto.

### Example 1

A plastic film-inserted laminated glass 3 shown in FIG. 15 was produced using an infrared-reflective coated plastic film 61 shown in FIG. 14 (as a plastic film 12 shown in FIG. 1), resin intermediate films 11 and 13 and curved glass plates 10 and 14.

Herein, the infrared-reflective coated plastic film 61 had: a PET film of 10 µm in thickness as a plastic film substrate 50; a hard coating 54 applied to one surface of the plastic film substrate 50; and an infrared-reflective coating 51 applied to the hard coating 54. As the hard coating 54, an acrylic hard coating of 5 µm in thickness was formed by a roll coating method. The infrared-reflective coating 51 was formed by alternately sputtering dielectric layers 53 and 52 onto the hard coating 54. There were used TiO₂ layers and SiO₂ layers as the dielectric layers 53 and 52, respectively. The thickness of the TiO₂ layer and the thickness of the SiO₂ layers were set to 105 nm and 175 nm, respectively. Further, the number of the dielectric layers 53 and the number of the dielectric layers 52 were set to 5 and 4, respectively, so that the infrared-reflective coating 51 was in the form of a nine-layer laminated coating in which the TiO₂ layers (thickness: 105 nm) and the SiO₂ layers (thickness: 175 nm) were alternately laminated together.
The infrared-reflective coated plastic film 61 also had a coating 55 of a silane coupling agent formed by a roll coating method on a surface of the plastic film substrate 50 opposite from the surface on which the hard coating 54 was formed.

The heat shrinkage of the infrared-reflective coated plastic film 61 was measured by the following procedure according to JIS C 2318.

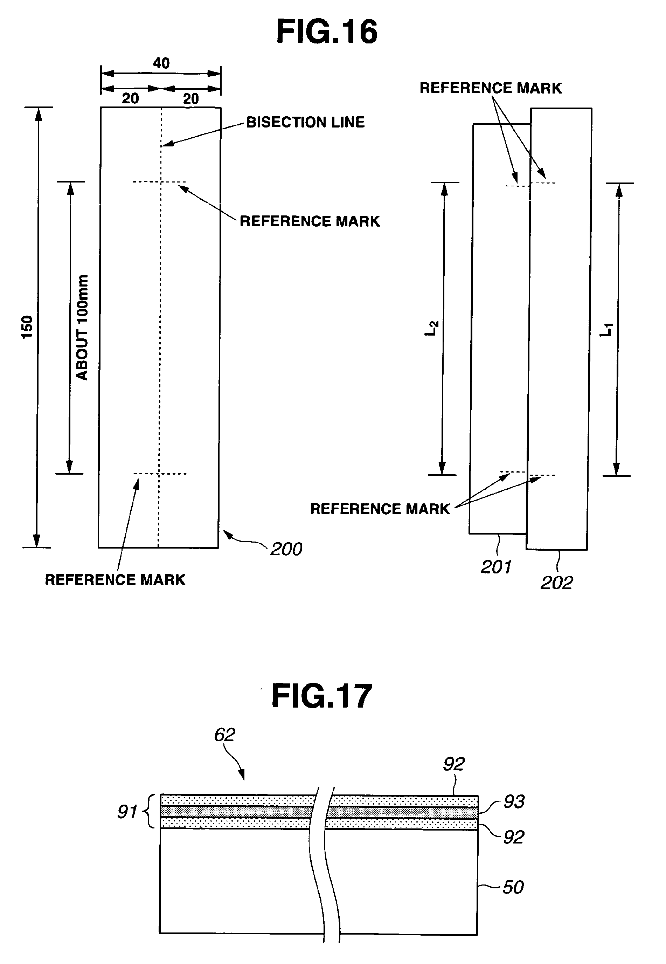

As shown in FIG. 16, a rectangular film sample 200 of 150 mm in length and 40 mm in width was cut out from the plastic film 61. Using a diamond pen, reference marks were indicated at around centers of the rectangular film sample 200 in respective width directions with an interval of about 100 mm therebetween. After indicating the reference marks, the rectangular film sample 200 was cut into two equal test pieces 201 and 202 of 150 mm × 20 mm in size. The test piece 201 was maintained at a room temperature. The other test piece 202 was vertically hung in a hot-air circulation thermostat oven, heated to a measurement temperature of 130°C at a temperature increase rate of about 5°C/min, and then, maintained at the measurement temperature for about 30 minutes. After that, the hot-air circulation thermostat oven was opened to the air so that the test piece 202 was subjected to natural cooling at a cooling rate of about 20°C/min. The test piece 202 was then maintained at a room temperature for 30 minutes. A thermocouple thermometer was used for temperature measurements; and the temperature distribution in the hot-air circulation thermostat oven was set within ±1°C. The distance L1, L2 between the reference marks of each of the test pieces 201 and 202 was measured using a scanning laser microscope "1LM21D" manufactured by Lasertec Corporation. The heat shrinkage value (%) was calculated according to the following equation: (L1 - L2)/L1 × 100. Herein, three rectangular film samples 200 were cut out for each of MD and TD directions of the plastic film 60; and the heat shrinkage was determined as an average of the heat shrinkage values of these three rectangular film samples 200 as measured by the above measurement procedure.

As the resin intermediate films 11 and 13, PVB films of 0.38 mm in thickness were used.

As the curved glass plates 10 and 14, there were used those having a size of 250 mm × 350 mm and a thickness of 2mm. These curved glass plates 10 and 14 had a radius of curvature ranging from 0.9 to 1 mm. More specifically, the curvature radius of peripheral portions of the glass plates 10 and 14 was 0.9 mm; and the curvature radius of center portions of the glass plates 10 and 14 was 1 mm.

The plastic film-inserted laminated glass 3 was completed through the following steps 1 to 3.
Step 1: The curved glass plates 10 and 14, the resin intermediate films 11 and 13 and the infrared-reflective coated plastic film 61 were placed in a room of temperature 18°C and left in the room for 1 hour, followed by confirming that each of these structural components reached a temperature of 18°C. After that, a laminate 2 was formed by subsequently laminating the resin intermediate film 13, the infrared-reflective coated plastic film 61, the resin intermediate film 11 and the curved glass plate 11 on the curved glass plate 14.
Step 2: In the same room of temperature 18°C as used in the step 1, the laminate 2 was placed in a vacuum bag 40 as shown in FIGS. 11 and 12. Air was discharged from the vacuum bag 30 through a nozzle 41 using an air discharge pump (not shown) to bring the inside of the vacuum bag 40 in a low-pressure state and thereby degas the laminate 2.
Step 3: In a state where the laminate 2 was being degassed in the vacuum bag 40 in the step 2, the vacuum bag 40 was placed in an autoclave and subjected to a pressing and heating treatment for 15 minutes. The pressing and heating treatment was performed under the conditions of a pressing pressure of 0.2 MPa and a heating temperature of 95°C. The vacuum bag 4 with the laminate 2 placed therein was taken out of the autoclave. The laminate 2 was then taken out of the vacuum bag 40. At this time, the laminate 2 was already being thermally bonded by the resin intermediate films 11 and 13. This thermally bonded laminate 2 was again placed in the autoclave and subjected to a pressing and heating treatment for 30 minutes. The pressing and heating treatment was performed under the conditions of a pressing pressure of 1MPa and a heating temperature of 140°C.

The plastic film-inserted laminated glass 3 of Example 1 had good appearance with no wrinkles in the infrared-reflective coated plastic film 61 and no cracks in the infrared-reflective coating 51. Further, the plastic film-inserted laminated glass 3 had a maximum reflectance of 60% or higher in a wavelength range 900 to 1200 nm and thus showed favorable infrared reflection characteristics. There was almost no difference between the infrared reflection characteristics of the plastic film-inserted laminated glass 3 and the infrared reflection characteristics of the infrared-reflective coated plastic film 61 before the lamination operation.

### Example 2

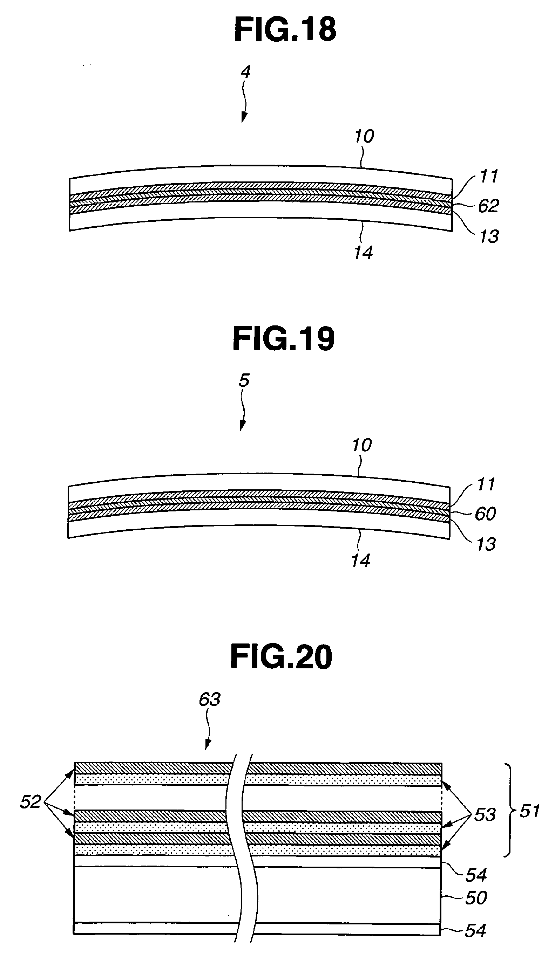

A plastic film-inserted laminated glass 4 shown in FIG. 18 was produced in the same manner as in Example 1 except for using an infrared-reflective coated plastic film 62 shown in FIG. 17.

The infrared-reflective coated plastic film 62 had: a PET film of 50 µm in thickness as a plastic film substrate 50; and an infrared-reflective coating with a zinc oxide layer 92 applied to one surface of the plastic film substrate 50, a metal layer 93 applied to the zinc oxide layer 92 and another zinc oxide layer 92 applied to the metal layer. There was used a silver layer as the metal layer 93. Both of the metal layer 93 and the zinc oxide layers 92 were formed by a sputtering method.

The plastic film-inserted laminated glass 4 of Example 2 had good appearance, with no wrinkles observed, as in the case of the plastic film-inserted laminated glass 3 of Example 1.

### Example 3

A plastic film-inserted laminated glass 3 shown in FIG. 15 was produced in the same manner as in Example 1 except that the laminate 2 was degassed by fitting a rubber-base resin tube 30 around the laminate 2 as shown in FIGS. 9 and 10 in place of using the vacuum bag 40 as in Example 1.

The plastic film-inserted laminated glass 3 of Example 3 also had good appearance, with no wrinkles observed, as in the case of that of Example 1.

### Example 4

A plastic film-inserted laminated glass 5 shown in FIG. 19 was produced in the same manner as in Example 1 except for using an infrared-reflective coated plastic film 60 shown in FIG. 13 and using as the glass plates 10 and 14 float glass plates having the same thickness as that of Example 1 and curved with a radius of curvature of 2.8 to 3 mm.

The infrared-reflective coated plastic film 60 had: a PET film of 50 µm in thickness as a plastic film substrate 50; and an infrared-reflective coating 51 applied to one surface of the plastic film substrate 50. The infrared-reflective coating 51 used was the same as that of Example 1. This infrared-reflective coated plastic film 60 showed a heat shrinkage of 1.5% in an MD direction and 1% in a TD direction as measured in the same manner as in Example 1.

The plastic film-inserted laminated glass 5 of Example 4 also had good appearance, with no wrinkles in the infrared-reflective coated plastic film 60 and no cracks in the infrared-reflective coating 51, as in the case of the plastic film-inserted laminated glass 3 of Example 1.

### Example 5

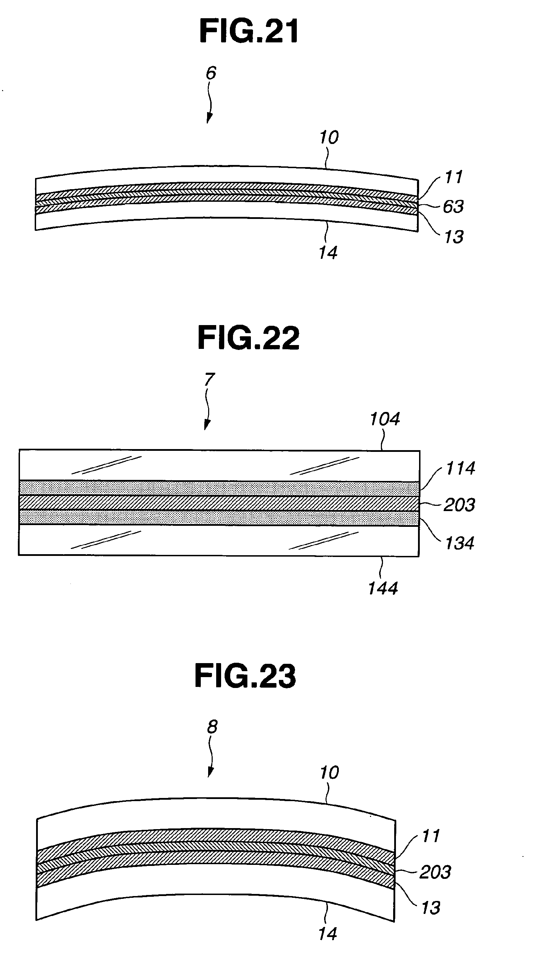

A plastic film-inserted laminated glass 6 shown in FIG. 21 was produced in the same manner as in Example 1 except for using an infrared-reflective coated plastic film 63 shown in FIG. 20.

The infrared-reflective coated plastic film 63 had: a PET film, which was the same as that of Example 4, as a plastic film substrate 50; acrylic hard coatings 54 of 2 µm in thickness applied to both surfaces of the plastic film substrate 50; and an infrared-reflective coating 51 applied to the hard coating 54 on one surface of the plastic film substrate 50 in the same manner as in Example 1. This infrared-reflective coated plastic film 63 showed a heat shrinkage of 1% in an MD direction and 0.6% in a TD direction as measured in the same manner as in Example 1.

The plastic film-inserted laminated glass 6 of Example 5 also had good appearance with no wrinkles in the infrared-reflective coated plastic film 63 and no cracks in the infrared-reflective coating 51.

### Example 6

A plastic film-inserted laminated glass 6 shown in FIG. 21 was produced in the same manner as in Example 5 except that the structure and forming process of the infrared-reflective coated plastic film 63 were different.

The infrared-reflective coated plastic film 63 had: a PET film of 100 µm in thickness, which showed a heat shrinkage of 4% in an MD direction and 3.5% in a TD direction at 150°C, as a plastic film substrate 50; acrylic hard coatings 54 of 2 µm in thickness applied to the PET film in the same manner as in Example 5 and simultaneously heat treated at 50°C; and an infrared-reflective coating 51 applied to the hard coating 54 on one surface of the plastic film substrate 50 in the same manner as in Example 5. This infrared-reflective coated plastic film 63 showed a heat shrinkage of 2.0% in an MD direction and 1.6% in a TD direction as measured in the same manner as in Example 1.

The plastic film-inserted laminated glass 6 of Example 6 also had good appearance with no wrinkles in the infrared-reflective coated plastic film 63 and no cracks in the infrared-reflective coating 51.

### Example 7

A plastic film-inserted laminated glass 7 shown in FIG. 22 was produced in the same manner as in Example 1 except for using a plastic film 203, two PVB films (resin intermediate films) 114 and 134 and two flat glass plates 104 and 144. The plastic film 203 used was a polyethylene terephthalate film (PET film) (thickness: 50 µm) having an elastic modulus of 40 MPa at 130°C. The PVD films 114 and 134 were 0.38 µm in thickness. The plastic film 203 was sandwiched between these PVD films 114 and 134. The glass plates 104 and 144 were 300 mm × 300 mm in size and 2 mm in thickness.

The plastic film-inserted laminated glass 7 of Example 7 had good appearance with no wrinkles in the plastic film 203.

### Example 8

A plastic film-inserted laminated glass 8 shown in FIG. 23 was produced in the same manner as in Example 7 except for using two curved glass plates 10 and 14 having a radius of curvature of 1200 mm, a size of 250 mm × 350 mm and a thickness of 2 mm.

The plastic film-inserted laminated glass 8 of Example 8 also had good appearance with no wrinkles.

### Example 9

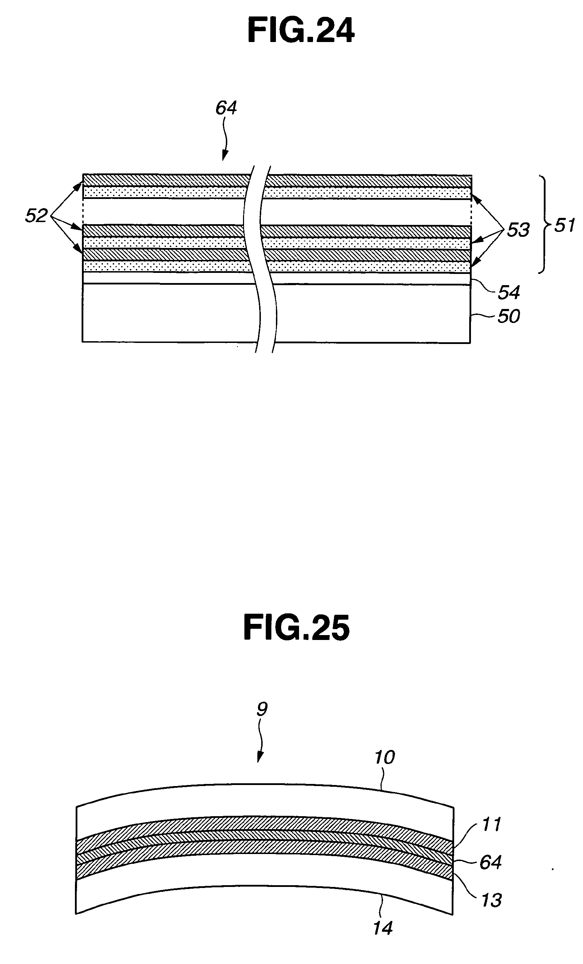

A plastic film-inserted laminated glass 9 shown in FIG 25 was produced in the same manner as in Example 1 except for using an infrared-reflective coated plastic film 64 shown in FIG. 24.

Herein, the infrared-reflective coated plastic film 64 had: a PET film of 100 µm in thickness as a plastic film substrate 50; a hard coating 54 applied to one surface of the plastic film substrate 50; and an infrared-reflective coating 51 with dielectric layers 52 and 53 alternately laminated together on the hard coating 54. As the hard coating 54, an acrylic hard coating of 5 µm in thickness was used. There were used TiO₂ layers (thickness: 105 nm) and SiO₂ layers (thickness: 175 nm) as the dielectric layers 53 and 52, respectively. The infrared-reflective coating 51 was formed by a sputtering method with the same structure as that of Example 1. This infrared-reflective coated plastic film 64 showed an elastic modulus of 1000 MPa at 130°C.

The plastic film-inserted laminated glass 9 of Example 9 also had good appearance with no wrinkles observed.

### Example 10

An plastic film-inserted laminated glass 7 shown in FIG. 22 was produced by subsequently laminating a glass plate 144, a resin intermediate film 134, a plastic film 203, a resin intermediate film 114 and a glass plate 103 together, cutting and removing unnecessary portions of the resin intermediate film 114, the plastic film 203 and the resin intermediate film 134 protruding from edges of the glass plates, and then, processing the resulting laminate in the same manner as in Example 1. As the glass plates 102 and 144, there were used soda-lime float flat glass plates having a size of 300 mm × 300 mm and a thickness of 2 mm. The plastic film 203 used was a PET film (thickness: 100 µm). This PET film showed an elongation of 0.02% in an MD direction and 0.13% in a TD direction as measured at 150°C under the application of a tensile load of 10 N per 1 mm film width. The elongation was herein measured in the above-mentioned steps 1 to 5 using a thermo mechanical analysis device (PTC10A) manufactured by Rigaku Corporation. Further, PVB films of 0.38 mm in thickness were used as the resin intermediate films 114 and 134.

The plastic film-inserted laminated glass 7 of Example 10 also had good appearance with no wrinkle-shaped appearance defects in the plastic film 203.

### Example 11

A plastic film-inserted laminated glass 8 shown in FIG. 23 was produced in the same manner as in Example 8 except for using soda-lime float glass plates having a size of 250 mm × 300 mm and a thickness of 2 mm and curved with a radius of curvature of 1200 mm as the glass plates 10 and 14.

The plastic film-inserted laminated glass 8 of Example 11 had good appearance, with no wrinkle-shaped appearance defects in the plastic film 203, as in the case of that of Example 8.

### Example 12

A plastic film-inserted laminated glass 6 shown in FIG. 21 was produced in the same manner as in Example 8 except for using an infrared-reflective coated plastic film 63 shown in FIG. 20 in place of the plastic film 203.

Herein, the infrared-reflective coated plastic film 63 was formed by the following procedure. Acrylic hard coatings 54 of 5 µm in thickness were applied to both surfaces of a PET film substrate 50. Further, an infrared-reflective coating 51 was formed by using dielectric layers 52 of Nb₂O₅ and dielectric layers 53 of SiO₂ and, more specifically, by subsequently sputtering a Nb₂O₅ layer (thickness: 115 nm), a SiO₂ layer (thickness: 175 nm), a Nb₂O₅ layer (thickness: 115 nm), a SiO₂ layer (thickness: 175 nm), a Nb₂O₅ layer (thickness: 115 nm), a SiO₂ layer (thickness: 175 nm) and a Nb₂O₅ layer (thickness: 115 nm) onto the hard coating 54 on one surface of the PET film 20. The infrared-reflective coated plastic film 63 with the hard coatings 54 and the infrared-reflective coating 51 showed an elongation of 0.01% or less in an MD direction and 0.19% in a TD direction at 150°C (as measured under the application of a tensile load of 10 N per 1 mm film width).

The plastic film-inserted laminated glass 6 of Example 12 also had good appearance with no wrinkle-shaped appearance defects in the infrared-reflective coated plastic film 63.

### Example 13

A plastic film-inserted laminated glass 3 shown in FIG. 15 was produced using the same infrared-reflective coated plastic film 61, the same resin intermediate films 11 and 13 and the same curved glass plates 10 and 14 as those of Example 1 and in the same manner as in Example 1 except that the step 1 was performed in the following three substeps.
Substeps 1a and 1b: The curved glass plates 10 and 14, the resin intermediate films 11 and 13 and the infrared-reflective coated plastic film 61 were placed in a room of temperature 18°C and left in the room for 1 hour, followed by confirming that each of these structural components reached a temperature of 18°C. After that, the infrared-reflective coated plastic film 61 was laminated on the resin intermediate film 11 in the room of temperature 18°C in such a manner as to bring the infrared-reflective coating 51 into contact with the resin intermediate film 11 (substep 1a). The resulting film laminate was passed through between a heating roll and a pressing roll 87 and thereby degassed as shown in FIG. 2A (step 2b). With this, the two-layer laminated film of the resin intermediate film 11 and the infrared-reflective coated plastic film 61 was prepared. Herein, the heating roll 83 used was made of a metal material; and the surface temperature of the heating roll 83 was set to 90°C. The pressing roll 87 used was made of a silicon rubber.; and the pressure of the pressing roll was set to 0.2 MPa. The transfer speed of the laminated roll by roll rotation was set to 3 m/s.
Substep 1c: The above laminated film and the resin intermediate film 13 was laminated together so as to thereby form the three-layer laminated film of the resin intermediate film 11, the plastic film 61 and the resin intermediate film 13. Before forming such a three-layer laminated structure, it was confirmed that each of the laminated film and the resin intermediate film 13 was 18°C. The laminated film, the resin intermediate film 13 and the curved glass plate 14 were then sequentially laminated on the curved glass plate 10 in the room of temperature 18°C in such a manner as to sandwich the plastic film 61 of the laminated film between the resin intermediate films 11 and 13.

The plastic film-inserted laminated glass 3 of Example 13 had good appearance with no wrinkles in the infrared-reflective coated plastic film 61 and no cracks in the infrared-reflective coating 51. Further, the plastic film-inserted laminated glass 3 had a maximum reflectance of 60% or higher in a wavelength range 900 to 1200 nm and thus showed favorable infrared reflection characteristics. There was almost no difference between the infrared reflection characteristics of the plastic film-inserted laminated glass 3 and the infrared reflection characteristics of the infrared-reflective coated plastic film 61 before the lamination operation.

### Example 14

A plastic film-inserted laminated glass 4 shown in FIG. 18 was produced in the same manner as in Example 13 except for using the same infrared-reflective coated plastic film 62 as that of Example 2.

The plastic film-inserted laminated glass 4 of Example 14 also had good appearance, with no wrinkles observed in the plastic film 62, as in the case of the plastic film-inserted laminated glass 3 of Example 13.

### Example 15

A plastic film-inserted laminated glass 3 shown in FIG. 15 was produced in the same manner as in Example 13 except that the laminate 2 was degassed by fitting a rubber-base resin tube 30 around the laminate 2 as shown in FIGS. 9 and 10 in place of using the vacuum bag 40 as in Example 13.

The plastic film-inserted laminated glass 3 of Example 15 also had good appearance, with no wrinkles observed in the plastic film 61.

### Example 16

A plastic film-inserted laminated glass 5 shown in FIG. 19 was produced in the same manner as in Example 13 except for using the same infrared-reflective coated plastic film 60 and the same glass plates 10 and 14 as those of Example 4.

The plastic film-inserted laminated glass 5 of Example 16 also had good appearance with no wrinkles in the infrared-reflective coated plastic film 60 and no cracks in the infrared-reflective coating 51.

### Example 17

A plastic film-inserted laminated glass 6 shown in FIG. 21 was produced in the same manner as in Example 13 except for using the same infrared-reflective coated plastic film 63 as that of Example 5.

The plastic film-inserted laminated glass 6 of Example 17 also had good appearance with no wrinkles in the infrared-reflective coated plastic film 63 and no cracks in the infrared-reflective coating 51.

### Example 18

A plastic film-inserted laminated glass 6 shown in FIG. 21 was produced in the same manner as in Example 13 except for using the same infrared-reflective coated plastic film 63 as that of Example 6.

The plastic film-inserted laminated glass 6 of Example 18 also had good appearance with no wrinkles in the infrared-reflective coated plastic film 63 and no cracks in the infrared-reflective coating 51.

### Example 19

A plastic film-inserted laminated glass 7 shown in FIG. 22 was produced in the same manner as in Example 7 except that the step 1 was performed in three substeps 1a, 1b and 1c as in Example 13.

The plastic film-inserted laminated glass 7 of Example 19 also had good appearance with no wrinkles in the plastic film 203.

### Example 20

A plastic film-inserted laminated glass 8 shown in FIG. 23 was produced in the same manner as in Example 19 except for using the same curved glass plates 10 and 14 as those of Example 8.

The plastic film-inserted laminated glass 8 of Example 20 also had good appearance with no wrinkles observed.

### Example 21

A plastic film-inserted laminated glass 9 shown in FIG. 25 was produced in the same manner as in Example 13 except for using the same infrared-reflective coated plastic film 64 as that of Example 9.

The plastic film-inserted laminated glass 9 of Example 21 also had good appearance with no wrinkles observed.

### Example 22

A plastic film-inserted laminated glass 7 was produced in the same manner as in Example 10 except that the step 1 was performed in three substeps 1a, 1b and 1c as in Example 13.

The plastic film-inserted laminated glass 7 of Example 22 also had good appearance with no wrinkle-shaped appearance defects in the infrared-reflective coated plastic film 203.

### Example 23

A plastic film-inserted laminated glass 8 shown in FIG. 23 was produced in the same manner as in Example 20 except for using the same glass plates as those of Example 11.

The plastic film-inserted laminated glass 8 of Example 23 also had good appearance with no wrinkle-shaped appearance defects in the plastic film 203.

### Example 24

A plastic film-inserted laminated glass 6 shown in FIG. 21 was produced in the same manner as in Example 20 except for using the same infrared-reflective coated plastic film 63 as that of Example 12.

The plastic film-inserted laminated glass 6 of Example 24 also had good appearance with no wrinkle-shaped appearance defects in the plastic film 63.

### Comparative Example 1

A plastic film-inserted laminated glass 3 shown in FIG. 15 was produced in the same manner as in Example 1 except that the steps 1 and 2 were performed at a room temperature of 28°C.

In Comparative Example 1, there were observed wrinkles in the plastic film 61 at a periphery of the plastic film-inserted laminated glass 3. The plastic film-inserted laminated glass 3 of Comparative Example 1 was not suitable for practical use due to such appearance defects.

### Comparative Example 2

A plastic film-inserted laminated glass 5 shown in FIG. 19 was produced in the same manner as in Example 1 except for using an infrared-reflective coated plastic film 60 shown in FIG. 13.

The infrared-reflective coated film 60 had a PET film, which was the same as that of Example 1, as a plastic film substrate 50; and an infrared-reflective coating 51 with the same dielectric layers 52 and 53 as those of Example 1, 20 layers in total, alternately laminated together on the plastic film substrate 50. This infrared-reflective coated plastic film 60 showed a heat shrinkage of 0.4% in an MD direction and 0.2% in a TD direction at 150°C as measured in the same manner as in Example 1.

In Comparative Example 2, there were also observed wrinkles in the plastic film 60 at a periphery of the plastic film-inserted laminated glass 5. The plastic film-inserted laminated glass 5 of Comparative Example 2 was not suitable for practical use due to such appearance defects.

### Comparative Example 3

A plastic film-inserted laminated glass 6 shown in FIG. 21 was produced in the same manner as in Example 1 except for using an infrared-reflective coated plastic film 63 shown in FIG. 20.

The infrared-reflective coated plastic film 63 had: a PET film of 100 µm in thickness, which showed a heat shrinkage of 1.0% in a MD direction and 0.5% in a TD direction at 150°C, as a plastic film substrate 50; acrylic hard coatings 54 of 2 µm in thickness applied to both surfaces of the PET film in the same manner as in Example 5; and an infrared-reflective coating 51 applied to the hard coating 54 on one surface of the PET film in the same manner as in Example 1. This infrared-reflective coated plastic film 63 showed a heat shrinkage of 0.3% in an MD direction and 0.2% in a TD direction as measured in the same manner as in Example 1.

There were observed, in Comparative Example 3, wrinkles in the plastic film 63 at a periphery of the plastic film-inserted laminated glass 6. The plastic film-inserted laminated glass 6 of Comparative Example 3 was not suitable for practical use due to such appearance defects. There were also observed cracks in the infrared-reflective coating 50 at locations corresponding to the wrinkles.

### Comparative Example 4

A plastic film-inserted laminated glass 6 shown in FIG. 21 was produced in the same manner as in Example 1 except for using an infrared-reflective coated plastic film 63 shown in FIG. 20.

The infrared-reflective coated plastic film 63 had: a PET film of 100 µm in thickness, which showed a heat shrinkage of 8% in an MD direction and 7% in a TD direction at 150°C, as a plastic film substrate 50; acrylic hard coatings 54 of 2 µm in thickness applied to the PET film; and an infrared-reflective coating 51 applied in the same manner as in Example 1. This infrared-reflective coated plastic film 63 showed a heat shrinkage of 7% in an MD direction and 6% in a TD direction as measured in the same manner as in Example 1.

In the plastic film-inserted laminated glass 6 of Comparative Example 4, there were no wrinkle-shaped defects in the infrared-reflective coated plastic film 63; but cracks occurred in the whole of the infrared-reflective coating 51. The plastic film-inserted laminated glass 6 of Comparative Example 4 was thus not suitable for practical use.

### Comparative Example 5

A plastic film-inserted laminated glass 3 shown in FIG. 15 was produced in the same manner as in Example 1 except for using as the glass plates 10 and 14 two curved glass plates of the same shape, each of which had a size of 250 mm × 350 mm, a thickness of 2 mm and a radius of curvature of 0.7 mm at minimum at a peripheral portion thereof and 0.8 m at a center portion thereof.

There were observed, in Comparative Example 5, wrinkles in the plastic film 61 at a periphery of the plastic film-inserted laminated glass 3. The plastic film-inserted laminated glass 3 of Comparative Example 5 was not suitable for practical use due to such appearance defects.

### Comparative Example 6

A plastic film-inserted laminated glass 8 shown in FIG. 23 was produced in the same manner as in Example 8 except for using as the plastic film 203 a PET film having an elastic modulus of 20 MPa at 130°C.

There occurred wrinkle-shaped appearance defects in the whole of the plastic film-inserted laminated glass 8 of Comparative Example 6.

### Comparative Example 7

An infrared-reflective coated plastic film-inserted laminated glass 9 shown in FIG. 25 was produced in the same manner as in Example 9 except for using a PET film having an elastic modulus of 3000 MPa at 130°C as the plastic film substrate 50 in the infrared-reflective coated plastic film 64 shown in FIG. 24.

The plastic film-inserted laminated glass 9 of Comparative Example 7 was not suitable for practical use due to its poor degassing state where air remained in the space between the plastic film 64 and the PVD films 11 and 13 at around the center of the glass.

### Comparative Example 8

A plastic film-inserted laminated glass 7 shown in FIG. 22 was produced in the same manner as in Example 8 except for using as the plastic film 203 a PET film (thickness: 100 µm) having an elongation of 0.3% at 150°C.

There occurred wrinkle-shaped appearance defects in the whole of the plastic film-inserted laminated glass 7 of Comparative Example 8.

### Comparative Example 9

A plastic film-inserted laminated glass 8 shown in FIG. 23 was produced in the same manner as in Example 9 except for using as the plastic film 203 a PET film (thickness: 100 µm) having an elongation of 0.3% at 150°C.

There also occurred wrinkle-shaped appearance defects in the whole of the plastic film-inserted laminated glass 8 of Comparative Example 9.

### Comparative Example 10

A plastic film-inserted laminated glass 3 shown in FIG. 15 was produced in the same manner as in Example 13 except that the substep 1c and the step 2 were performed at a room temperature of 28°C.

In Comparative Example 10, there were observed wrinkles in the plastic film 61 at a periphery of the plastic film-inserted laminated glass 3. The plastic film-inserted laminated glass 3 of Comparative Example 10 was not suitable for practical use due to such appearance defects.

### Comparative Example 11

A plastic film-inserted laminated glass 5 shown in FIG. 19 was produced in the same manner as in Example 13 except for using the same infrared-reflective coated plastic film 60 as that of Comparative Example 2.

There were observed, in Comparative Example 11, wrinkles in the plastic film 60 at a periphery of the plastic film-inserted laminated glass 5. The plastic film-inserted laminated glass 5 of Comparative Example 11 was not suitable for practical use due to such appearance defects.

### Comparative Example 12

A plastic film-inserted laminated glass 6 was produced in the same manner as in Example 13 except for using the same infrared-reflective coated plastic film 63 as that of Comparative Example 3 (i.e. in the same manner as in Comparative Example 3 except that the step 1 was performed in the three substeps 1a, 1b and 1c as in Example 13).

There was also observed, in Comparative Example 12, wrinkles in the plastic film 63 at a periphery of the plastic film-inserted laminated glass 6. The plastic film-inserted laminated glass 6 of Comparative Example 12 was not suitable for practical use due to such appearance defects.

### Comparative Example 13

A plastic film-inserted laminated glass 6 shown in FIG. 21 was produced in the same manner as in Example 13 except for using the same infrared-reflective coated plastic film 63 as that of Comparative Example 4.

In the plastic film-inserted laminated glass 6 of Comparative Example 13, there were no wrinkle-shaped defects in the infrared-reflective coated plastic film 63; but cracks occurred in the whole of the infrared-reflective coating 51. The plastic film-inserted laminated glass 6 of Comparative Example 13 was thus not suitable for practical use.

### Comparative Example 14

A plastic film-inserted laminated glass 3 shown in FIG. 15 was produced in the same manner as in Example 13 except for using the same glass plates 10 and 14 as those of Comparative Example 5.

In Comparative Example 14, there were observed wrinkles in the plastic film 61 at a periphery of the plastic film-inserted laminated glass 3. The plastic film-inserted laminated glass 3 of Comparative Example 14 was not suitable for practical use due to such appearance defects.

### Comparative Example 15

A plastic film-inserted laminated glass 8 shown in FIG. 23 was produced in the same manner as in Example 20 except for using the same plastic film 203 as that of Comparative Example 6.

There also occurred wrinkle-shaped appearance defects in the whole of the plastic film-inserted laminated glass8 of Comparative Example 15.

### Comparative Example 16

An infrared-reflective coated plastic film-inserted laminated glass 9 shown in FIG. 25 was produced in the same manner as in Example 20 except for using the same plastic film substrate 50 as that of Comparative Example 7.

The plastic film-inserted laminated glass 9 of Comparative Example 16 was not suitable for practical use due to its poor degassing state where air remained in the space between the plastic film 64 and the PVD films 11 and 13 at around the center of the glass.

### Comparative Example 17

A plastic film-inserted laminated glass 8 shown in FIG. 23 was produced in the same manner as in Example 21 except for using the same plastic film 203 as that of Comparative Example 9.

There also occurred wrinkle-shaped appearance defects in the whole of the plastic film-inserted laminated glass 8 of Comparative Example 17.

As described above, the plastic film-inserted laminated glass 1 produced by the production process according to the present invention attains good appearance with no wrinkles in the plastic film 12. It is possible in the present invention to produce the plastic film-inserted laminated glass 1 without causing any wrinkles in the plastic film 12 even in the case where the glass plates 10 and 14 have a radius of curvature that changes with position, or changes with direction even in the same position, as in automobile and vehicle windows.

Although the present invention has been described with reference to the above specific embodiments, the invention is not limited to these exemplary embodiments. Various modifications and variations of the embodiments described above will occur to those skilled in the art without departing from the scope of the present invention.

## Claims

1. A production process of a plastic film-inserted laminated glass, the plastic film-inserted laminated glass having a laminated film in which a plastic film of 30 to 200 µm in thickness is sandwiched between two resin intermediate films and two glass plates, the process comprising at least the following three steps:
a step 1 for forming a laminate in which the glass plate, the resin intermediate film, the plastic film, the resin intermediate film and the glass plate are laminated together in order of mention;
a step 2 for degassing the formed laminate; and
a step 3 for bonding the degassed laminate by pressing and heating,
wherein the steps 1 and 2 are performed under conditions that the temperature of working atmosphere and the temperatures of the plastic film and resin intermediate films fall within a range of 10 to 25°C.

2. The production process of the plastic film-inserted laminated glass according to claim 1, wherein the step 1 includes the following three substeps:
a substep 1a for forming a film laminate by laminating at least one of the resin intermediate films and the plastic film;
a substep 1b for forming a laminated film by degassing the film laminate; and
a substep 1c for forming the laminate by laminating the laminated film and the glass plates, and
wherein the substep 1c and the step 2 are performed under the conditions that the temperature of the working atmosphere and the temperatures of the plastic film and resin intermediate films fall within the range of 10 to 25°C.

3. The production process of the plastic film-inserted laminated glass according to claim 2, wherein the substep 1b includes heating the plastic film and thermally bonding the plastic film to said at least one of the resin intermediate films.

4. The production process of the plastic film-inserted laminated glass according to claim 1, wherein the step 1 is performed by inserting the plastic film between the resin intermediate layer to thereby form the laminated film and inserting the laminated film between the two glass plates, or by subsequently laminating, on one of the glass plates, the resin intermediate film, the plastic film, the resin intermediate film and the other of the glass plates.

5. A plastic film-inserted laminated glass produced by the production process according to any one of claims 1 to 4, wherein the glass plates have a curved shape with a radius of curvature of 0.9 to 3 m.

6. The plastic film-inserted laminated glass according to claim 5, wherein the plastic film is an infrared-reflective coated plastic film having a plastic film substrate and an infrared-reflective coating formed on one surface of the plastic film substrate.

7. The plastic film-inserted laminated film according to claim 6, wherein the infrared-reflective coating has 4 to 11 dielectric layers laminated together and shows a maximum reflectance of higher than 50% in a wavelength range of 900 to 1400 nm so as to satisfy the following conditions (1) and (2):
(1) nₑₘₐₓ < nₒₘᵢₙ or nₒₘₐₓ < nₑₘᵢₙ where, when the dielectric layers are numbered in order from a side of the plastic film substrate, nₑₘₐₓ and nₑₘᵢₙ represent the maximum and minimum values of the refractive index of an even-numbered layer, respectively; and nₒₘₐₓ and nₒₘᵢₙ represent the maximum and minimum values of the refractive index of an odd-numbered layer, respectively; and
(2) 225 nm ≤ ni·di ≤ 350 nm relative to infrared rays having a wavelength λ of 900 to 1400 nm where nᵢ and dᵢ represent the reflective index and thickness of an i-th numbered layer, respectively.

8. The plastic film-inserted laminated film according to claim 7, wherein the infrared-reflective coating is formed using TiO₂, Nb₂O₅ or Ta₂O₅ for high-refractive-index dielectric layers and SiO₂ for low-refractive-index dielectric layers.

9. The plastic film-inserted laminated film according to any one of claims 5 to 8, wherein the resin intermediate films are infrared-absorptive films containing therein conductive oxide particles as an infrared-absorptive material.

10. The plastic film-inserted laminated film according to any one of claims 5 to 9, wherein the resin intermediate films have a thickness of 0.3 to 1.2 mm.

11. The plastic film-inserted laminated glass according to any one of claims 5 to 9, wherein the infrared-reflective coated plastic film satisfies either of the following conditions (A), (B) and (C):
(A) the infrared-reflective coated plastic film has a heat shrinkage of 0.5 to 4% in a temperature range of 90 to 150°C;
(B) the plastic film substrate has an elastic modulus of 30 to 2000 MPa in a temperature range of 90 to 150°C; and
(C) the plastic film substrate has an elongation of 0.3% or less as measured in a temperature range of 90 to 150°C under the application of a tensile load of 10 N per 1 mm width of the plastic film substrate.

12. The plastic film-inserted laminated glass according to any one of claims 6 to 12, wherein the plastic film has a coating of a silane coupling agent formed on a side of the plastic film substrate opposite from the side on which the infrared-reflective coating is formed.

13. The plastic film-inserted laminated glass according to any one of claims 6 to 12, wherein the plastic film has a hard coating between the plastic film substrate and the infrared-reflective coating.

14. The plastic film-inserted laminated glass according to any one of claims 5 to 13, wherein the laminated glass has a visible light transmittance of 70% or higher as measured according to JIS R 3211-1998.

15. The plastic film-inserted laminated glass according to any one of claims 5 to 14, wherein at least one of the glass plates is an infrared-absorptive glass plate.
